# EUROPÄISCHE PATENTANMELDUNG

(11) **EP 2 355 003 A1**
(43) Veröffentlichungstag der Anmeldung: **10.08.2011**
(21) Anmeldenummer: 10010989.1
(22) Anmeldetag: 28.09.2010
(51) Int. Cl.: G06K 7/00, G06K 13/08

(54) **SIM-Kartenleser**

(30) Priorität: 03.02.2010 DE 102010006655
(71) Anmelder: Amphenol-tuchel Electronics GmbH, 74080 Heilbronnn (DE)
(72) Erfinder: Stolz, Joachim, 74354 Besigheim (DE)
(74) Vertreter: Wendels, Stefan

(57) **Zusammenfassung**

Die Erfindung betrifft einen SIM-Kartenleser mit einer Höhe H umfassend einen Kontaktträger mit kontaktträgerseitigen Lagermittel, an denen ein von einer Öffnungsstellung in eine Schließstellung schwenkbar und verschiebbarer Klapp-Schiebedeckel angeordnet ist, wobei der Klapp-Schiebedeckel über Seitenwände verfügt, an dessen einem Ende sich jeweils ein Lagerarm und an dessen anderen Ende sich jeweils ein V-förmiges, deckelseitiges Rastmittel befindet, wobei die deckelseitigen Rastmittel zum Eingriff in am Kontaktträger ausgebildeten, kontaktträgerseltigen Rastmittel ausgebildet sind und wobei die Rastmittel in ihrem V-förmigen vorderen Krümmungsabschnitt während der Schließstellung des Deckels im wesentlichen in der halben Höhe H des Kartenlesers positioniert sind.

## Beschreibung

Die Erfindung bezieht sich auf einen SIM-Kartenleser mit den Merkmalen des Patentanspruch 1.

Aus der WO 91/15101 A1 ist eine Kontaktiereinrichtung für ein SIM (Subscriber Identity Module) bekannt.

Bei dieser Kontaktiereinrichtung ist ein als Kontaktträger ausgebildetes Gehäuse vorgesehen und das SIM wird durch einen Deckel oder ein Gehäusetell bei eingesetzten SIM gegen im Kontaktträger angeordnete Kontaktelemente gedrückt.

Lager und Anlenkmittel dienen zur Lagerung des Deckels am Kontaktträger.

Die DE 364 2424 C2 zeigt einen Kartenleser, bei dem ein Gehäuse mit einem Kontaktträger und einem schwenkbaren Deckel vorgesehen ist, welcher am Gehäuse drehbar gelagert ist.

SIM-Kartenleser werden üblicherweise in elektronischen Geräten, vorzugsweise in Mobilfunkgeräten verwendet und müssen daher möglichst klein gebaut sein.

Daneben handelt es sich bei Mobilfunkanwendungen um Massenprodukte, die gleichzeitig zu einem möglichst günstigen Preis in einer Massenfertigung hergestellt werden müssen und darüber hinaus über eine Vielzahl von Funktionen verfügen sollen.

Üblicherweise werden SIM-Kartenleser mit einem schwenkbaren Deckel ausgestattet, um die Karte in den Deckel einzusetzen und diese zusammen mit dem Deckel von einer Öffnungsposition in eine Schließposition überzuführen.

Hierbei stellt sich regelmäßig das Problem, wie der Deckel am Kontaktträger in seiner Schließstellung verrasten soll, ohne dass Mittel bereitgestellt werden müssen, die in irgendeiner Art und Weise Einfluss auf die Bauhöhe des SIM-Kartenlesers nehmen.

Die im Stand der Technik genannte Lösungen verwenden dabei Verrastprinzipien, die entweder nur für Metalldeckel geeignet sind oder bei Verwendung eines Kunststoffdeckels nicht dünner ausgeführt werden können, da es dann zu Materialbruch kommt, da die Rastmittel in ihrer Materialdicke derart dünn und geschwächt ausgebildet werden müssten, dass eine sichere und dauerhafte mechanische Verriegelung nicht gewährleistet ist.

Werden beispielsweise Schnappmechanismen verwendet, die in Z-Richtung kraftbeaufschlagt werden (durch die Federkraft der Kontakte, die über die Karte auf den Deckel übertragen wird), so kommt es zu Fließbewegungen im Kunststoff und im ungünstigsten Falle zu einem Versagen der Deckeiverriegetung.

Aufgabe der vorliegenden Erfindung ist es daher, einen SIM-Kartenleser mit einem Kunststoffdeckel bereit zu stellen, der über eine minimale Bauhöhe verfügt und über eine sichere Deckelverrastung zwischen dem Deckel und dem Kontaktträger in seiner Lese- und Schließstellung, Es soll mit Vorteil ein Kartenleser bereitgestellt werden, der eine Bauhöhe geringer von 1,6 mm aufweist.

Diese Aufgabe wird mit den Merkmalen von Anspruch 1 gelöst.

Die erfindungsgemäße Lösung sieht dabei einen SIM-Kartenleser vor, bei dem die deckelseitigen und kontaktträgerseitigen Rastmittel so in Bezug auf den Deckel und den Kontaktträger angeordnet, dass sich eine möglichst optimale geometrische Bedingung für die Materialverteilung und damit Stabilität ergibt und in einer bevorzugten Ausgestaltung der Kontaktträgerboden im Bereich der Deckelverrastung ausgespart ist und somit die gesamte Höhe des Kartenlesers mit deckelseitigen Verrastungsmitteln ausgestattet werden kann, die vorzugsweise als über die gesamte Höhe des Kartenlesers verlaufende Seitenwände ausgebildet sind.

Vorzugsweise werden die Rast- und Gegenrastmittel in etwa der Mitte der Gesamthöhe des Kartenlesers angeordnet, so dass oberhalb und unterhalb der Rastpunkte maximale Materialstärken bezogen auf die absolute Kartenleserhöhe vorhanden sind.

In einer bevorzugten Ausgestaltung der Erfindung befindet sich am Kartenleserdeckel jeweils ein v-förmiges deckelseltiges Rastmittel, dessen Stimpunkt in etwa der halben Höhe der Kartenleserhöhe angeordnet ist.

Folglich befindet sich die Position des kontaktträgerseitigen Gegenrastmittels, ebenfalls in etwa der halben Höhe der gesamten Kontaktträgerhöhe.

Die Beschreibung der Erfindung bezieht sich auf einen SIM-Kartenleser kleiner Bauform mit schräger Kante, welcher typische Außenmaße von circa 17 mm x 30 mm aufweist.

SIM-Karten sind im Stand der Technik ausreichend beschrieben.

Vorbesagte Probleme treten bei Smart-Cards oder größeren Kartenlesern nahezu nicht auf, da diese über deutlich größere Kartenabmessungen verfügen und bereits die Kartendicke in einer Größenordnung liegt, die der Dicke der erfindungsgemäßen SIM-Karteniesevorrichtung entspricht.

Im Stand der Technik weisen gattungsgemäße SIM-Karteniesevorrichtungen Gesamtbauhöhen in der Größenordnung von circa 2 mm auf.

Mit der erfindungsgemäßen Lehre, der hier beschriebenen Erfindung lassen sich Kartenleser mit einer Gesamtbauhöhe von kleiner 1,6 mm herstellen, die noch über eine ausreichend mechanisch stabile Deckelverrastung verfügen.

Einzelhelten der Erfindung ergeben sich aus der Beschreibung von Ausführungsbeispielen anhand der Zeichnung. In der Zeichnung zeigt:
Fig. 1 eine perspektivische Ansicht eines erfindungsgemäßen SIM-Kartenlesers;
Fig. 2 eine Detailansicht der Deckelverrastung entsprechend Fig. 1;
Fig. 3 eine perspektivische Ansicht eines der beiden Lagerstellen eines SIM-Kartenlesers gemäß Fig. 1;
Fig. 4 eine mechanische Abfolge der Schließbewegung und Verriegelungsbewegung des Klapp-Schlebedeckels eines erfindungsgemäßen SIM-Kartenlesers.

In den Unteransprüchen werden weitere Ausführungsformen der Erfindung beansprucht.

Auch die Kombination aller Merkmale, auch wenn diese nicht ausdrücklich beschrieben ist, sollen als beschriebene Ausführungsbeispiele nach der vorliegenden Lehre betrachtet werden.

Die SIM-Karte;

Die dargestellten Figuren zeigen einen SIM-Kartenleser 1 ohne eine SIM-Karte.

Im folgenden wird der Begriff SIM-Karte verwendet, bei dem eine Subscriber Identity Module Karte der kleinen Bauart gemeint ist, bei dem an einer Vorderkante eine Abschrägung (Schräge) vorhanden ist, die auch als Kartencodierung dient, damit die Karte in einer korrekten Position in den Kartenleser eingesteckt werden kann. Eine solche Karte hat eine Kartendicke von circa 0,75 zuzüglich den typischen Toleranzen.

Die SIM-Kartenlesevorrichtung:

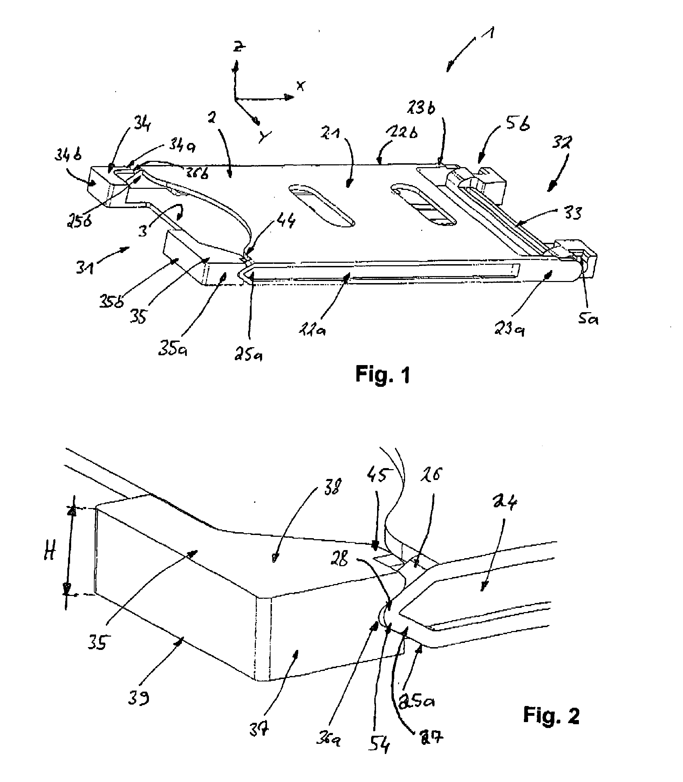

In Fig. 1 ist ein SIM-Kartenleser 1 dargestellt, welcher in der xy-Achse dargestellt ist und dessen Höhe sich in Richtung der z-Achse erstreckt. Der SIM-Kartenleser 1 verfügt über eine Höhe H. Mit Vorteil beträgt die Höhe H 1,5 mm. Der SIM-Kartenleser 1 verfügt über einen Klapp-Schiebedeckel 2, sowie einen Kontaktträger 3, an dem der Klapp-Schiebedeckel 2 mit Lagermittel 20a, 20b an kontaktträgerseitigen statischen Lagermittel 5a, 5b befestigt ist.

Der Kontaktträger:
Der Kontaktträger 3 verfügt über ein im wesentlichen ebenes Plattenteil 30 als Kartenaufnahmeboden.

Der Kontaktträger 3 verfügt über eine Vorderseite 31 und eine Hinterseite 32, wobei an der Hinterseite 32 eine Anlagekante 33 zur Anlage einer SIM-Karte vorgesehen ist

Die Anlagekante 33 erstreckt sich mit Vorteil über die Querseite des Kontaktträgers 3 in y-Richtung.

An diese schließt sich jeweils am rechten und linken hinteren Ende (Hinterseite 32) jeweils ein kontaktträgerseitiges Lagermittel 5a, 5b an.

An der Vorderseite 31 des Kontaktträgers 3 befinden sich an der vorderen linken Seite ein Anlagemittel 34 und an der vorderen rechten Seite ein Anlagemittel 35.

Mit Vorteil sind die Anlagemittel 34, 35, wie in Fig. 1 und Fig. 2 ersichtlich, im wesentlichen L-förmig ausgebildet.

Das Anlagemittel 34 verfügt über einen seitlichen Abschnitt 34a entlang der x-Achse und über eine vorderseitigen Anlageabschnitts 34b entlang der y-Achse.

Die beiden Abschnitte sind zu einem L-förmigen Block, dem Anlagemittel 34 materialschlüssig verbunden.

In ähnlicher Weise ist das Anlagemittel 35 ausgebildet. Dieses verfügt über einen seitlichen Abschnitt 35a, der sich in x-Richtung erstreckt und über einen vorderseitigen Anlageabschnitt 35b, welcher sich in y-Richtung erstreckt.

Die Höhe H der Anlagemittel 34, 35 entspricht der SIM-Kartenleserhöhe.

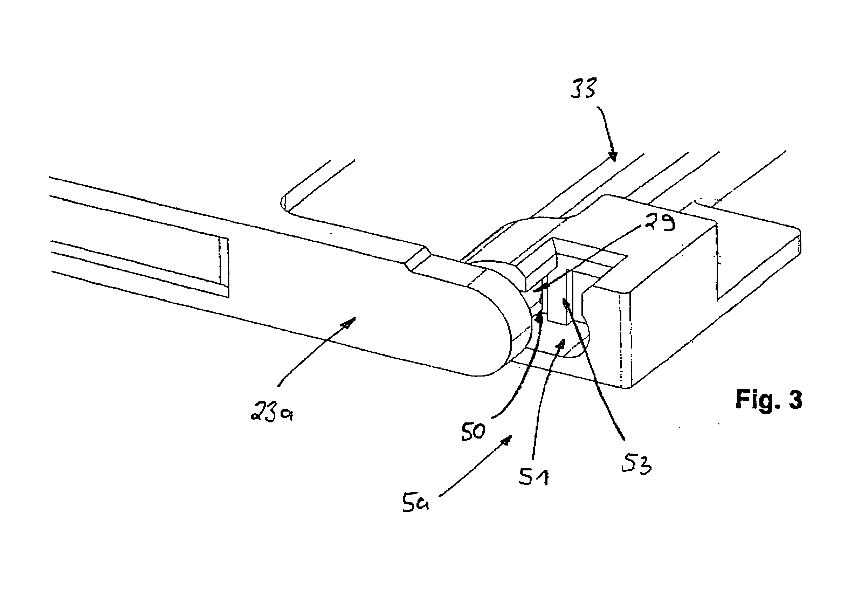

An der Hinterseite 32 des Kontaktträgers 3 befinden sich die Lagermittel 5a, 5b. Jedes der Lagermittel 5a, 5b verfügt über eine Lagerbuchse 50, die wie in Fig. 3 gezeigt, als U-förmige, halboffene Lagerbuchse 50 ausgebildet ist.

Das Lagermittel 5a verfügt über eine Montageöffnung 51, um die weiter unten beschriebenen Lagerzapfen des Klapp-Schiebedeckels 2 zur Montage aufnehmen zu können. Durch diese Montageöffnungen 51 hindurch können die deckelseitigen Lagerzapfen 29 eingeführt werden.

Die Lagermittel 5a, 5b sind so ausgestaltet, dass der deckelseitige Lagerzapfen 29 von einer Öffnungsstellung in eine Schlleßstellung überführt werden kann, wie diese in Fig. 3 dargstellt ist.

In der Schließstellung greift der deckelseitige Lagerzapfen 29 in die U-förmige Lagerbuchse 50 ein und wird von einem Rast- und Positioniermittel 53 in seiner Schließstellung gehalten.

Der Klapp-Schiebedeckel 2:
In den Fig. 1 bis 3 sind der Klapp-Schiebedeckel beziehungsweise Details des Klapp-Schiebedeckels dargestellt.

Der Klapp-Schiebedeckel 2 verfügt über ein im wesentlichen flaches Plattenteil 21, an dem sich Seitenwände 22a, 22b angeordnet sind.

Die Seltenwände 22a, 22b sind so am Plattenteil 21 des Klapp-Schiebedeckels 2 angeordnet, dass diese ein x-Richtung von dem Plattentell 21 nach hinten und vorne wegragen, dass dadurch am hinteren Ende des Klapp-Schlebedeckels 2 auf jeder Seite je ein Lagerarm 23a, 23b ausgebildet ist.

An den Lagerarmen 23a, 23b befinden sich Lagerzapfen 29, welche eine Schwenk- und Drehbewegung gegenüber den statischen Lagermittel 5a, 5b ermöglichen.

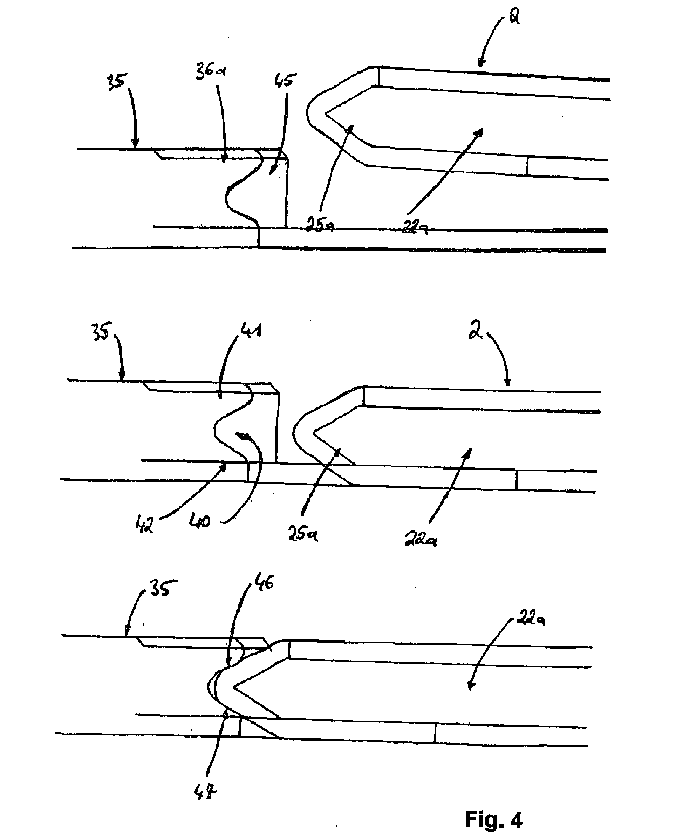

Die Lagerzapfen 29 können dabei im länglichen Lagermittel 5a, 5b hin- und her verschoben werden, so dass der Klapp-Schlebedeckel 2 von einer Öffnungsstellung in eine Schließstellung, wie in Fig. 4 dargestellt, übergeführt werden kann.

Die Seitenwände 22a, 22b erstrecken sich über die gesamte Höhe des SIM-Kartenlesers 1 und umfassen eine Nut 24, welche seitlich in die Seitenwände 22a, 22b eingepasst ist.

An den Seltenwänden 22a, 22b sind jeweils deckelseitige Rastmittel 25a, 25b angeordnet, welche mit den kontaktträgerseitigen Rastmitteln 36a, 36b zum Verrasten des Deckels in seiner Schlleßstellung dienen. Die Rastmittel 25a, 25b sind mit Vorteil, wie in Fig. 2 gezeigt, als V-förmige Rastmittel ausgebildet.

Mit Vorteil sind diese spiegelsymmetrisch zur xy-Mittelebene durch den Kontaktträger ausgebildet, so dass der Scheitelpunkt 54 des V-förmigen Ende eines jeden Rastmittels 25a, 25b in etwa der halben Höhe des SIM-Kartenlesers 1 angeordnet ist.

Die Rastmittel 25a, 25b verfügen über eine Rastmitteloberseite 26 und eine Rastmittelunterselte 27, welche über einen Krümmungsabschnitt 28 miteinander verbunden sind, wobei der Krümmungsabschnitt 28 im Scheitelpunkt 54 des Rastmittels liegt.

Wie deutlich in Fig. 1 und Fig. 2 ersichtlich, ist entlang der Kartenleserlänge der Kontaktträger 3 in selnem Plattenteil 30 unterhalb der Seltenwände 22a, 22b ausgespart, so dass keine Auflagefläche vom Kontaktträger 3 vorzufinden ist.

Hierdurch wird gewährleistet, dass jedenfalls Teile der Rastmittel 25a, 25b die gesamte Höhe H des SIM-Kartenlesers 1 umfassen und demzufolge mechanisch ausreichend stabil ausgebildet sind.

Kontaktträgerseitige Rastelemente 36a, 36b:
An den Anlagemitteln 34, 35 befinden sich jeweils Rastelemente 36a, 36b zum Verrasten mit den deckelseitigen Rastmittel 25a, 25b. Zum Verrasten der Rastelemente 36a, 36b mit den Rastmittel 25a. 25b wird der Klapp-Schiebedeckel 2, wie in Fig. 4 gezeigt, in seine Schließstellung gebracht und in dieser so verschoben, dass die deckelseitigen Rastmittel 25a, 25b mit ihrem V-förmigen Ende in eine korrespondierende Ausnehmung 40 ausgebildet in den Anlagemitteln 34, 35 eingreifen kann. Die Ausnehmungen 40 werden so an den Anlagemitteln 34, 35 angebracht, dass diese über einen oberen Halteabschnitt 41 und einen unteren Halteabschnitt 42 verfügen, zwischen dem die zum Rastmittel 25a, 25b korrespondierende, im wesentliche V-förmige Ausnehmung 40 zwischen der Oberseite 38 und der Unterseite 39 angeordnet. Diese sind verbunden über einen Seitenwandabschnitt 37, der im Bereich des oberen Halteabschnitts 41 über eine Fase 43 verfügt.

Diese Fase 43 verhindert eine Beschädigung des Krümmungsabschnittes 28, im Falle. dass der Deckel in einer nicht bestimmungsgemäßen Position geschlossen wird. Hierbei wird der Klapp-Schiebedeckel 2, bedingt durch seine V-förmigen Rastmittel 25a, 25b und der Fase 43 soweit in Richtung seiner Öffnungsstellung zwangsweise zurückgeführt, dass die Rastmittel an dem oberen Halteabschnitt 41 entlang in die Ausnehmung 40 gleiten kann,

Mit Vorteil wird an einem der beiden Anlagemittel 34, 35 ein Vorsprung 44 angeordnet, welcher als seitliches Anlagemittel 45 dient. Hierdurch wird verhindert, dass der Deckel seitlich in y-Richtung verschoben wird.

Mit Vorteil ist die Ausnehmung 40 so beschaffen, dass die Oberseite 38 des Anlagemittels und die Unterseite 39 des Anlagemittels jeweils nur eine einzige obere, nahezu punktuelle Anlagefläche mit der Ausnehmung 40 und eine nahezu punktuelle untere Anlagefläche 47 mit der Ausnehmung 40 bildet.

Alternativ kann die Ausnehmung 40 eine im wesentliche korrespondierende Form zu den Rastmitteln 25a, 25b aufweisen.

Die Arbeitsweise des erfindungsgemäßen SIM-Kartenlesers 1:
Der Bediener kann den Klapp-Schiebedeckel 2, wie in Fig. 4 gezeigt, von einer Öffnungsstellung in eine Schließstellung verschwenken und mittels einer Translationsbewegung in x-Richtung in eine verrastete Schließstellung überführen, in dem er den Deckel entsprechend der Abfolge in Fig. 4 verschiebt. Dabei greifen die Rastmittel 25a, 25b mit ihrem V-förmigen Ende in die korrespondierenden Ausnehmungen 40 ein und halten den Kontaktträger in seiner Schließstellung fest. Hierdurch wird eine stabile Lesestellung bei einer In den SIM-Kartenleser 1 eingelegter SIM-Karte erzielt.

### Bezugszeichenliste

### SIM-Kartenleser

- 1: SIM-Kartenleser
- 2: Klapp-Schiebedeckel
- 3: Kontaktträger

- 5a, 5b: kontaktträgerseitige Lagermittel (statisch)

- 20a, 20b: deckelseitige Lagermittel
- 21: Plattenteil
- 22a, 22b: Seitenwände
- 23a, 23b: Lagerarme
- 24: Nut
- 25a, 25b: Rastmittel (v-förmige)
- 26: Rastmitteloberselte
- 27: Rastmittelunterseite
- 28: Krümmungsabschnitt
- 29: Lagerzapfen
- 30: Plattenteil
- 31: Vorderseite
- 32: Hinterseite
- 33: Anlagekante
- 34: Anlagemittel
- 34a: seitlicher Anlageabschnitt
- 34b: vorderseitiger Anlageabschnitt
- 35: Anlagemittel
- 35a: seitlicher Anlageabschnitt
- 35b: vorderseitiger Anlageabschnitt
- 36a. 36b: kontaktträgerseitige Rastelemente
- 37: Außenwandabschnitt
- 38: Oberseite des Anlagemittels
- 39: Unterseite der Anlagemittel
- 40: Ausnehmung
- 41: oberer Halteabschnitt
- 42: unterer Halteabschnitt
- 43: Fase
- 44: Vorsprung
- 45: seitliche Anlagemittel
- 46: obere Anlagefläche
- 47: untere Anlagefläche

- 50: Lagerbuchsen
- 51: Montageöffnung
- 52: Phase
- 53: Rast- und Positionlermittel
- 54: Scheitelpunkt

## Patentansprüche

1. SIM-Kartenleser (1) mit einer Höhe H umfassend einen Kontaktträger (3) mit kontaktträgerseitigen Lagermittel (5a, 5b), an denen ein von einer Öffnungsstellung in eine Schließstellung schwenkbar und verschiebbarer Klapp-Schiebedeckel (2) angeordnet ist, wobei der Klapp-Schiebedeckel (2) über Seitenwände (22a, 22b) verfügt, an dessen einem Ende sich jeweils ein Lagerarm (23a, 23b) und an dessen anderen Ende sich jeweils ein V-förmiges, deckelseitiges Rastmittel (25a, 25b) befindet, wobei die deckelseitigen Rastmittel (25a, 25b) zum Eingriff in am Kontaktträger (3) ausgebildeten, kontaktträgerseitigen Rastmittel (36a, 36b) ausgebildet sind und wobei die Rastmittel (25a. 25b) in ihrem V-förmigen vorderen Krümmungsabschnitt (28) während der Schließstellung des Deckels im wesentlichen in der halben Höhe H des Kartenlesers (1) positioniert sind.

2. SIM-Kartenleser (1) gemäß Anspruch 1, **dadurch gekennzeichnet, dass** die Rastmittel (25a, 25b) in zumindest einem Abschnitt mit ihrer Höhe entsprechend der Gesamthöhe H des Kartenlesers (1) ausgebildet sind.

3. SIM-Kartenleser (1) gemäß Anspruch 1 oder 2, **dadurch gekennzeichnet, dass** die Seitenwände (22a, 22b) eine Höhe aufweisen, die im wesentlichen der Höhe H entspricht.

4. SIM-Kartenleser (1) gemäß Anspruch 1, 2 oder 3, **dadurch gekennzeichnet, dass** der Kontaktträger (3) an seiner Vorderseite (31) über Anlagemittel (34, 35) verfügt, an denen die kontaktträgerseitigen Rastmittel (36a, 36b) ausgebildet sind.

5. SIM-Kartenleser (1) gemäß Anspruch 4, **dadurch gekennzeichnet, dass** die kontaktträgerseitigen Rastmittel (36a, 36b) als Ausnehmungen (40) in den Anlagemitteln (34, 35) ausgebildet sind.

6. SIM-Kartenleser (1) gemäß Anspruch 4 oder 5, **dadurch gekennzeichnet, dass** die Anlagemittel (34, 35) über eine Oberseite (38) und eine Unterseite (39) verfügen, an welche sich jeweils benachbart, je ein oberer Halteabschnitt (41) und ein unterer Halteabschnitt (42) anschließt, die jeweils untereinander durch die Ausnehmung (40) verbunden sind, derart, dass die Halteabschnitte (41, 42) die deckelseitigen Rastmittel (25a, 25b) an mindestens zwei Anlageflächen (46, 47) verrastend festlegen.

7. SIM-Kartenleser (1) gemäß einem der vorhergehenden Ansprüche, **dadurch gekennzeichnet, dass** die kontaktträgerseitigen Lagermittel (5a, 5b) über U-förmige Lagerbuchsen (50) verfügen, zur Aufnahme von an den deckelseitigen Lagermittel (23a, 23b) angebrachten Lagerzapfen (29).

8. SIM-Kartenleser (1) gemäß einem der vorhergehenden Ansprüche, **dadurch gekennzeichnet, dass** die Lagermittel (5a, 5b) über eine an der Oberseite des Kontaktträgers (3) eingeformten Montageöffnung (51) zur Deckelmontage des Klapp-Schiebedeckels (2) verfügen.

9. SIM-Kartenleser (1) gemäß einem der vorhergehenden Ansprüche, **dadurch gekennzeichnet, dass** der Aufnahmeraum der Lagermittel (5a, 5b) ein Rast- und Positloniermittel (53) aufweist, welches den Klapp-Schiebedeckel (2) In seiner Schließstellung in x-Richtung verrastend hält.

10. SIM-Kartenleser (1) gemäß einem der vorhergehenden Ansprüche, **dadurch gekennzeichnet, dass** mindestens eins der Anlagemittel (34, 35) benachbart zur Ausnehmung (40) über einen Vorsprung (44) verfügt, welcher ein seitliches Anlagemittel (45) ausbildet und den Deckel (2) so In seiner Schließstellung in Y-Richtung positioniert.
